Europäisches Patentamt

(19) European Patent Office

Office européen des brevets

(11) Publication number: **0 046 784**
**B1**

(12) EUROPEAN PATENT SPECIFICATION

(45) Date of publication of patent specification: 27.07.83     (51) Int. Cl.³: **B 65 G 47/14, B 65 G 47/57**

(21) Application number: **81900573.7**

(22) Date of filing: **20.02.81**

(86) International application number:
**PCT/DK81/00019**

(87) International publication number:
**WO 81/02417 03.09.81 Gazette 81/21**

(54) **APPARATUS FOR TRANSFERRING ARTICLES FROM A SUPPLY CONVEYOR TO A DISCHARGE CONVEYOR.**

(30) Priority: **21.02.80 DK 755/80**

(43) Date of publication of application:
**10.03.82 Bulletin 82/10**

(45) Publication of the grant of the patent:
**27.07.83 Bulletin 83/30**

(84) Designated Contracting States:
**DE FR GB**

(56) References cited:
**DE - C - 358 691**
**DK - B - 114 444**
**GB - A - 1 359 575**

(73) Proprietor: **PETERSEN, Gunnar Christian**
**Rodkildevaenget 14**
**DK-5230 Odense M (DK)**

(72) Inventor: **PETERSEN, Gunnar Christian**
**Rodkildevaenget 14**
**DK-5230 Odense M (DK)**

(74) Representative: **Spall, Christopher John et al,**
**BARKER, BRETTELL & DUNCAN 138 Hagley Road**
**Edgbaston Birmingham B16 9PW (GB)**

Apparatus for transferring articles from a supply conveyor to a discharge conveyor

This invention relates to an apparatus for transferring articles from a supply conveyor to an upwardly inclined discharge conveyor having pockets defined between transversely extending horizontal carriers, which apparatus comprises, at the lower end of the discharge conveyor, an upwardly open V-shaped chamber defined between the conveyor, an opposed rear wall, and two end walls, the mutual spacing of which exceeds the width of the discharge conveyor, and means adapted to impart to said chamber walls an oscillating movement in parallel with the carriers of the discharge conveyor.

Such apparatus can be employed inter alia in connection with a packaging machine provided with an automatic weighing device which receives the articles from the discharge conveyor and successively weighs out predetermined quantities of the articles which are subsequently carried on to be packaged. In order to obtain a maximum utilization of the packaging machine it is important that as far as possible all pockets of the discharge conveyor are full. Markedly elongate articles, such as carrots or frozen fish fillets, are only caught with certainty by the carriers if they have been aligned in parallel with the carriers by the oscillating movement of the chamber walls, and in order to avoid undue damage to the articles and interruptions of their transportation up from the chamber it is important that the alignment is effected as soon as possible after each article has arrived in the chamber.

The apparatus of the present invention is characterised in that an upwardly open, V-shaped chute is secured to one end wall of the chamber and extends substantially parallel to the carriers of the discharge conveyor from said chamber end wall below the supply conveyor, and in that the bottom of the chute is downwardly inclined from the supply conveyor towards the chamber end wall, into which it opens at a distance above the bottom of the chamber.

It has been found that an apparatus of this structure functions very efficiently and ensures both a gentle processing of the transferred articles and a high utilization of the capacity of the discharge conveyor. Due to the fact that the articles are introduced in parallel with the carriers of the discharge conveyor through the lateral chute which participates in the oscillation, elongate articles will already, as far as several of them are concerned, be oriented exactly or to a substantial degree in the desired direction when they arrive in the chamber, and this contributes to shortening their dwelling time in the chamber before they can be caught by the carriers. By locating the outlet from the chute to the chamber at a suitable height above the bottom one avoids the risk that articles already present in the chamber impede or hamper the continued introduction of articles through the chute. The oscillating movement of the chute contributes to reducing any tendency towards adhesion between individual articles and to ensuring that they are evenly distributed across the entire width of the chamber and thus across the width of the discharge conveyor.

In an expedient embodiment of the invention the edge of the chute outlet in the chamber end wall remote from the discharge conveyor is flush or substantially flush with the rear wall of the chamber. Since the articles introduced through the chute are thus guided toward the rear wall, there is only a limited risk that they collide with articles moving upwardly in the pockets of the discharge conveyor which might cause those articles to be pushed back into the chamber.

The bottom of the V-shaped chute is preferably oriented towards the rear wall of the chamber which in a similar way counteracts said collision risk.

The projection, onto a horizontal plane, of the angle included between the chute bottom and the chamber rear wall shall be relatively small in order that the articles shall not be projected towards the discharge conveyor from the rear wall when they come in contact with that wall. In practice, the angle may be within the range of 4—8°.

The height from the bottom of the chute outlet in the chamber end wall to the bottom of the chamber may correspond to at least one, and preferably two, layers of the articles to be transferred, so that the chamber can accommodate a suitable "buffer store" of articles to compensate for possible irregularites in the supply of articles to the apparatus.

The invention will be described in more detail below with reference to the accompanying schematical drawings, in which:

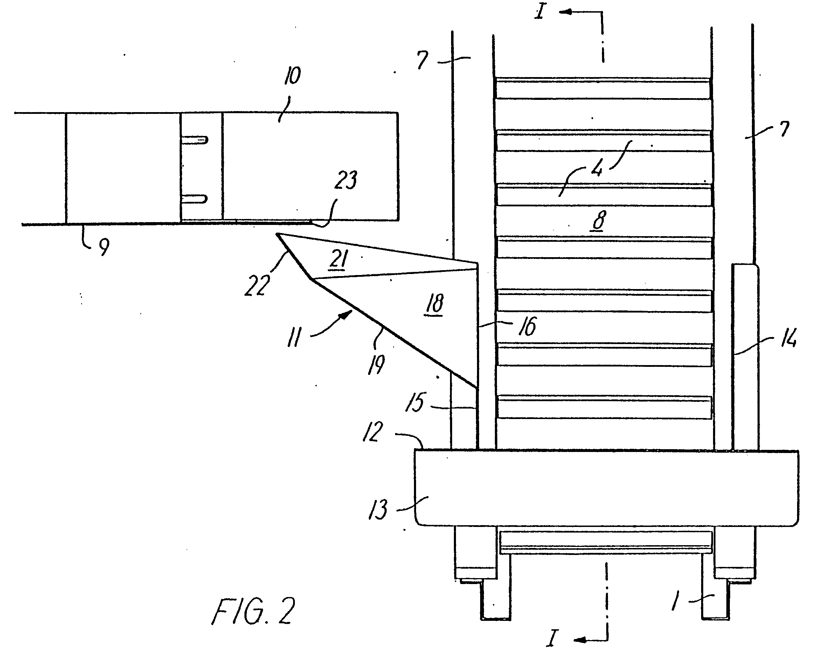

*Figure 1* shows an embodiment of the apparatus seen in a substantially vertical section along line I—I of Figure 2.

*Figure 2* is a section along the line II—II of Figure 1, and

*Figure 3* is a top plan view of the apparatus.

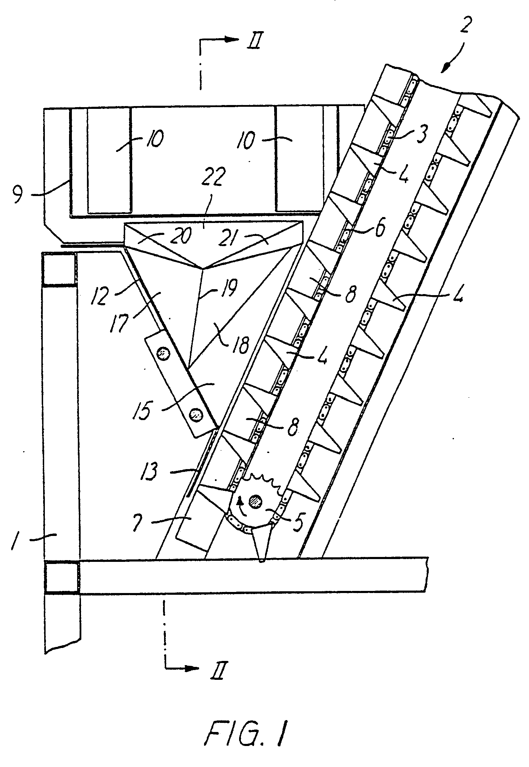

On a frame 1 (not shown in detail) there is mounted an upwardly inclined conveyor 2 consisting of two parallel endless chains 3 to which equispaced horizontal carriers 4 are secured. Each chain 3 is trained over a sprocket 5 at the lower end of the conveyor and a corresponding sprocket (not shown) at its upper end. During operation of the apparatus the sprockets rotate in the direction shown by an arrow in Fig. 1. Below the upwardly moving flight of the conveyor there is provided a stationary plate 6, and a stationary rail 7 extends upwardly immediately adjacent each end of carriers 4. Between the successive carriers 4, the plate 6 and the side rails 7 there is thus defined a series of pockets 8 for the transportation of articles (not shown) to the upper discharge end of the conveyor.

Said articles are supplied to the apparatus on a schematically shown conveyor 9, which is coupled to a vibrator (not shown) which imparts fast horizontal vibrations to the conveyor, and the effective width of the conveyor is narrowed towards its discharge end by means of two vertical guide plates 10.

For transferring the articles from the supply conveyor 9 to the discharge conveyor 2 the apparatus is provided with a unit, generally designated by 11, which in a manner not shown in detail is supported by frame 1 in such a way that it can perform an oscillating movement in parallel with the carriers 4 of the discharge conveyor. This movement can be generated by a mechanism known per se, e.g. a crank mechanism or a double acting fluid ram, and the movement occurs at substantially lower frequency than the vibration of conveyor 9 and with a substantially larger amplitude.

Unit 11 includes a plate 12 which is backwardly inclined relative to conveyor 2 and which extends laterally above rails 7. From its lowermost end which is located closely above the rails plate 12 merges into a downwardly inclined plate 13 extending in parallel with the rails. To the end section of plate 12 remote from conveyor 9 there is secured a triangular plate 14, the free lower edge of which is located in extension of plate 13 and which thus forms an end wall of an upwardly open and V-shaped chamber located between unit 11 and conveyor 2. The other end wall of the chamber is formed by a plate 15 which also is secured to plate 12 and which has a V-shaped cut-out 16, the downwardly oriented apex of which is located at a distance above the bottom of the chamber. Plates 14 and 15 are placed such that during the oscillating movement of unit 11 each plate always overlaps a respective side rail 7.

From either of the two edges of cut-out 16 a triangular plate, 17 and 18 resp., extends laterally below the discharge end of conveyor 9. Plates 17 and 18 form a V-shaped chute, the bottom 19 of which is downwardly inclined from conveyor 9. At their upper side edges plates 17 and 18 merge into two other, substantially triangular plates 20 and 21 which extend outwardly at a relatively small angle with the horizontal plane, and which at their rear edges, as seen from conveyor 2, are connected by means of a triangular plate 22, the upper horizontal edge of which is located closely below the discharge end of conveyor 9 and, in any position of the oscillating unit 11, behind the terminal edge 23 of the conveyor.

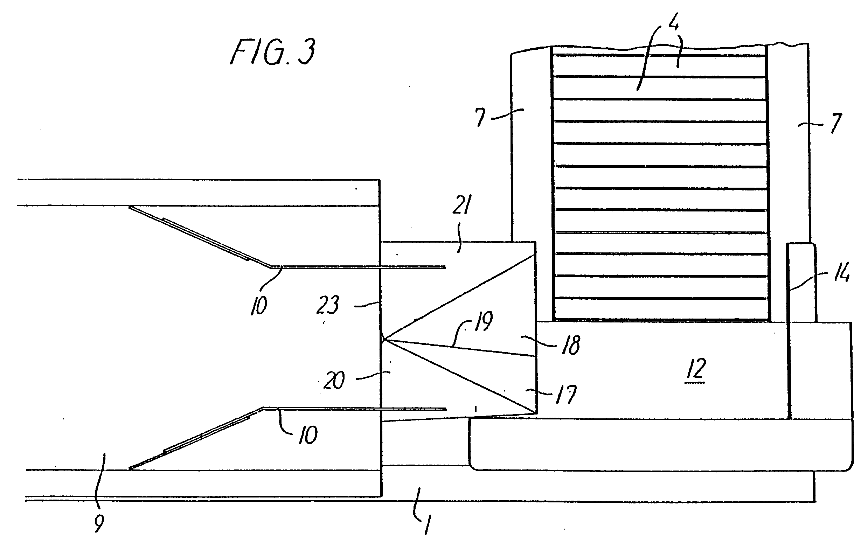

As initially mentioned the apparatus described can operate in combination with a packaging machine (not shown) having an automatic weighing device placed below the discharge end (not shown) of conveyor 2. The articles which are to be weighed out and packaged, are supplied in a more or less regular stream by means of the vibrating supply conveyor. From the discharge end thereof the articles fall down into the oscillating unit 11 and slide through the chute formed by plates 17 and 18 down into the chamber between conveyor 2, rear wall 12 and the two end walls 14 and 15. The oscillating movement of unit 11 contributes to separating the articles from one another and to transport them towards the remote end wall 14 of the chamber. Because bottom 19 of the chute is slightly inclined toward the rear wall 12 of the chamber, see Figs. 1 and 3, the articles are guided into the chamber as far away as possible from conveyor 2 and thus from those articles which are already travelling upward in the conveyor pockets 8. In the chamber there may be provided a sensor (not shown) which is activated if the articles present within the chamber protrude substantially above the lowermost point of the chute bottom 19, and which thereby stops the vibration of conveyor 9 so that overfilling of the chamber is avoided. When the lowermost point of cut-out 16 and hence of the chute bottom 19 is located at a distance above the bottom of the chamber, as shown, it is possible, by suitable adjustment of the sensor height, to limit the risk that the articles introduced through the chute collide with articles already present in the chamber, thereby hampering or delaying the removal of those articles from the chamber by means of carriers 4.

It will be seen that the described apparatus is suitable for processing not only elongate articles which become aligned substantially in parallel to carriers 4, before they are transported out of the chamber, but also for other articles, such as potatoes and onions, the dimensions of which in various directions differ less. For processing the last mentioned articles the width of the discharge conveyor, i.e. the length of carriers 4, may be adapted for simultaneous transportation of several articles in each pocket 8, whereas for more elongate articles the conveyor will as a rule be dimensioned to carry one article only in each pocket. For the sake of completeness it is further pointed out that the possible interruption, mentioned above, of the supply of articles by means of conveyor 9, in case the chamber at the bottom of discharge conveyor 2 becomes overfilled, should not be accompanied by any interruption of the oscillating movement of unit 11, because that movement can efficiently contribute to shaking the articles within the chamber in positions such that carriers 4 can catch them and thereby eliminate the overfilling.

## Claims

1. Apparatus for transferring articles from a supply conveyor (9) to an upwardly inclined discharge conveyor (2) having pockets (8) defined between transversely extending horizontal carriers (4), which apparatus comprises, at the lower end of the discharge conveyor, an upwardly open V-shaped chamber defined between the conveyor (2), an opposed rear wall (12), and two end walls (14, 15) the mutual spacing of which exceeds the width of the discharge conveyor, and means adapted to impart to said chamber walls an oscillating movement in parallel with the carriers of the discharge conveyor, characterised in that an upwardly open, V-shaped chute (17, 18) is secured to one end wall (15) of the chamber and extends substantially parallel to the carriers (4) of the discharge conveyor (2) from said chamber end wall (15) below the supply conveyor (9), and in that the bottom (19) of the chute is downwardly inclined from the supply conveyor towards the chamber end wall into which it opens at a distance above the bottom of the chamber.

2. Apparatus as claimed in claim 1, characterised in that the edge of the chute outlet (16) in the chamber end wall (15) remote from the discharge conveyor (2) is flush or substantially flush with the rear wall (12) of the chamber.

3. Apparatus as claimed in claim 1, characterised in that the bottom (19) of the V-shaped chute is oriented towards the rear wall (12) of the chamber.

4. Apparatus as claimed in claim 3, characterised in that the projection, onto a horizontal plane, of the angle included between the chute bottom (19) and the chamber rear wall (12) is 4° to 8° (Fig. 3).

5. Apparatus as claimed in any of claims 1—4, characterised in that the height from the bottom of the chute outlet (16) in the chamber end wall (15) to the bottom of the chamber corresponds to at least one, and preferably two, layers of the articles to be transferred.

**Revendications**

1. Dispositif de transfert d'articles d'un transporteur d'alimentation (9) à un transporteur de décharge (2) incliné vers le haut et doté de poches (8) définies entre des supports (4) horizontaux qui s'étendent transversalement, ledit dispositif comportant, à l'extrémité inférieure du transporteur de décharge, une chambre en forme de V, ouverte vers le haut, définie entre le transporteur (2), une paroi arrière opposée (12) et deux parois terminales (14, 15) dont l'espacement mutuel est supérieur à la largeur du transporteur de décharge, ainsi que des moyens prévus pour impartir auxdites parois de la chambre un mouvement oscillatoire parallèle aux supports du transporteur de décharge, caractérisé en ce qu'une trémie (17, 18) en forme de V, ouverte vers le haut, est fixée à l'une (15) des parois terminales de la chambre et s'étend essentiellement parallèlement aux supports (4) du transporteur de décharge (2) depuis cette paroi terminale (15) de la chambre sous le transporteur d'alimentation (9) et en ce que le fond (19) de la trémie est incliné vers le bas, du transporteur d'alimentation vers la paroi terminale de la chambre dans laquelle la trémie s'ouvre à une distance au dessus du fond de la chambre.

2. Dispositif selon la revendication 1, caractérisé en ce que le bord de la sortie de trémie (16) dans la paroi terminale de chambre (15) le plus éloigné du transporteur de décharge (2) est aligné ou essentiellement aligné avec la paroi arrière (12) de la chambre.

3. Dispositif selon la revendication 1, caractérisé en ce que le fond (19) de la trémie en forme de V est orienté vers la paroi arrière (12) de la chambre.

4. Dispositif selon la revendication 3, caractérisé en ce que la projection, sur un plan horizontal, de l'angle compris entre le fond de trémie (19) et la paroi arrière de chambre (12) est de 4° à 8° (Fig. 3).

5. Dispositif selon l'une quelconque des revendications 1 à 4, caractérisé en ce que la hauteur depuis le fond de la sortie de trémie (16) dans la paroi terminale de chambre (15) jusqu'au fond de la chambre correspond à au moins une, et de préférence deux couches des articles à transférer.

**Patentansprüche**

1. Vorrichtung zum Transferieren von Gegenständen von einer Zufuhrförderer (9) zu eine schräg nach oben führenden Abfuhrförderer (2) mit zwischen querverlaufenden, horizontalen Mitnehmern (4) abgegrenzten Taschen (8), welche Vorrichtung am unteren Ende des Abfuhrförderers eine nach oben offene, V-förmige Kammer aufweist, die zwischen dem Förderer (2), einer gegenüberstehenden Rückwand (12) und zwei Stirnwänden (14, 15), deren gegenseitiger Abstand die Breite des Abfuhrförderers übersteigt, abgegrenzt ist, sowie Mittel die den genannten Kammerwänden eine zu den Mitnehmern des Abfuhrförderers parallele, schwingende Bewegung erteilen, dadurch gekennzeichnet, dass eine nach oben offene, V-förmige Rinne (17, 18) an einer Stirnwand (15) der Kammer befestigt ist und sich im wesentlichen parallel zu den Mitnehmern (4) des Abfuhrförderers (2) von der genannten Kammerstirnwand (15) unter den Zufuhrförderer (9) hinein erstreckt, und dass der Rinnenboden (19) nach unten geneigt ist vom Zufuhrförderer in Richtung auf die Kammerstirnwand, in die die Rinne im Abstand oberhalb des Kammerbodens einmündet.

2. Vorrichtung nach Anspruch 1, dadurch gekennzeichnet, dass die im Verhältnis zum Abfuhrförderer (2) hintere Kante der Rinnenauslassöffnung (16) in der Kammerstirnwand (15) mit der Rückwand (12) der Kammer fluchtet oder im wesentlichen fluchtet.

3. Vorrichtung nach Anspruch 1, dadurch gekennzeichnet, dass der Boden (19) der V-förmigen Rinne gegen die Rückwand (12) der Kammer gerichtet ist.

4. Vorrichtung nach Anspruch 3, dadurch gekennzeichnet, dass die Projektion des von dem Rinnenboden (19) und der Kammerrückwand (12) eingeschlossenen Winkels auf eine horizontale Ebene 4° bis 8° ist (Fig. 3).

5. Vorrichtung nach einem der Ansprüche 1 bis 4, dadurch gekennzeichnet, dass die Höhe vom Boden der Rinnenauslassöffnung (16) in der Kammerstirnwand (15) bis zum Boden der Kammer mindestens einer Schicht, vorzugsweise zwei Schichten, der zu transferierenden Gegenstände entspricht.

FIG. 1

I

7

10

23

9

7

4

8

21

22

18

11

16

19

14

15

12

13

I

I

FIG. 2

FIG. 3

0 046 784